# FASCICULE DE BREVET EUROPEEN

(11) **EP 3 710 238 B1**
(45) Date de publication et mention de la délivrance du brevet: **15.02.2023**
(21) Numéro de dépôt: 18808407.3
(22) Date de dépôt: 09.11.2018
(51) Int. Cl.: B29C 70/38, B29C 35/16, B29C 35/08

(54) **TÊTE D'APPLICATION DE FIBRES AVEC DISPOSITIF DE SOUFFLAGE D'AIR**
FASERAPPLIKATIONSKOPF MIT LUFTBLASVORRICHTUNG
FIBRE APPLICATION HEAD WITH AIR-BLOWING DEVICE

(30) Priorité: 13.11.2017 FR 1771204
(43) Date de publication de la demande: 23.09.2020
(73) Titulaire: Coriolis Group, 56530 Quéven (FR)
(72) Inventeur: CAFFIAU, Johann, 56700 Hennebont (FR); WEBER, Jean-Philippe, 56270 Ploemeur (FR); HAMLYN, Alexander, 56270 Ploemeur (FR)
(86) Numéro de dépôt international: PCT/FR2018/000246
(87) Numéro de publication internationale: WO 2019/092329

(56) Documents cités:
- FR-A1- 2 948 058
- FR-A1- 3 009 510
- US-A1- 2007 187 021
- US-A1- 2008 093 026

## Description

La présente invention concerne une tête d'application de fibres pour une machine d'application de fibres pour la réalisation de pièces en matériau composite, et plus particulièrement une tête dite de placement de fibres équipée d'un rouleau d'application particulier. La présente invention concerne également un procédé de fabrication de pièces en matériau composite au moyen d'une tête d'application correspondante.

Il est connu des machines d'application de fibres, appelées couramment machines de placement de fibres, pour l'application au contact sur un outillage de drapage, tel qu'un moule mâle ou femelle, d'une bande large formée de plusieurs fibres plates continues, de type rubans, sèches ou imprégnées de résine thermodurcissable ou thermoplastique, notamment des fibres de carbone constituées d'une multitude de fils ou filaments de carbone.

Ces machines sont utilisées pour réaliser des préformes formées de plusieurs plis superposés, chaque pli étant formé par drapage sur le moule d'une ou plusieurs bandes côte à côte. Dans le cas d'un drapage de fibres pré-imprégnées de résine thermoplastique ou thermodurcissable, classiquement en une quantité d'au moins 40% en poids, la préforme préimprégnée obtenue après drapage est durcie ou polymérisée par passage dans un four pour obtenir une pièce en matériau composite. Dans le cas de fibres dites sèches, non pré-imprégnées de résines, les fibres comprennent une quantité réduite de résine dite de liaison, appelée également liant, généralement une résine thermoplastique, en une quantité inférieure ou égale à 5% en poids, pour conférer un caractère collant aux fibres lors du drapage. Après drapage, la préforme dite sèche est soumise à une opération d'injection ou d'infusion de résine avant l'étape de durcissement.

Ces machines, telles que décrites dans le document brevet WO2006/092514, comprennent classiquement une tête d'application de fibres, un système de déplacement de ladite tête, des moyens de stockage de fibres, et des moyens d'acheminement des fibres pour acheminer les fibres desdits moyens de stockage vers la tête. La tête comprend classiquement un rouleau d'application, également appelé rouleau de compactage, destiné à venir en contact contre le moule pour appliquer la bande, et des moyens de guidage des fibres sur ledit rouleau d'application.

La tête comprend en outre généralement un système de chauffage pour chauffer les fibres. Le rouleau de compactage presse la bande de fibres contre la surface d'application du moule, ou contre la ou les bandes de fibres précédemment déposées, afin de faciliter l'adhésion des bandes déposées entre elles, ainsi que pour évacuer progressivement l'air emprisonné entre les bandes déposées. Le système de chauffage assure un chauffage de la bande de fibres à appliquer, et/ou du moule ou des bandes déjà appliquées en amont du rouleau de compactage, juste avant le compactage de la bande, afin d'au moins ramollir la résine de préimprégnation ou la résine de liaison, et ainsi favoriser l'adhésion des bandes entre elles.

Dans le cas de résines thermodurcissables, les fibres pré-imprégnées sont simplement chauffées pour les ramollir, classiquement à des températures de l'ordre de 40°C. Le système de chauffage comprend classiquement un système de chauffage infrarouge comprenant une ou plusieurs lampes infrarouges.

Dans le cas de résines thermoplastiques, les fibres pré-imprégnées ou munies d'un liant doivent être chauffées à des températures plus élevées, au moins jusqu'à la température de fusion de la résine, soit de l'ordre de 200 °C pour des résines de type nylon, et jusqu'à environ 400°C pour des résines de type PEEK.

Pour atteindre ces températures plus élevées, il a été proposé des systèmes de torche à air chaud, et plus récemment des systèmes de chauffage de type laser pour obtenir un chauffage précis et concentré. En raison des températures de chauffage élevées, les têtes de placement de fibres sont classiquement équipées de rouleaux de compactage métalliques, résistants à la chaleur, qui peuvent en outre être refroidis par l'intérieur via un circuit d'eau. Pour pouvoir s'adapter au profil de la surface d'application, il a été proposé des rouleaux de compactage métalliques segmentés, comprenant plusieurs segments de rouleaux indépendants montés côte à côte sur un même axe, chaque segment étant déplaçable radialement et de manière indépendante, et étant sollicité élastiquement contre la surface d'application. Ces rouleaux métalliques segmentés s'avèrent toutefois de structure et de mise en oeuvre complexes.

Des rouleaux souples formés à partir d'un élastomère dit haute température, incluant un stabilisant thermique, sont également utilisés. Ces rouleaux comprennent généralement une gaine antiadhérente thermorétractée et collée sur le cylindre en matériau élastomère, tel que décrit dans les document brevets FR 2948058 et FR 3009512. Pour les refroidir, il a été proposé d'équiper les têtes de placement d'un système de refroidissement apte à délivrer un flux d'air pour refroidir le rouleau par l'extérieur ou par l'intérieur, comme décrit dans le document brevet FR 2948058. Malgré ces systèmes de refroidissement, les rouleaux souples peuvent avoir tendance à se détériorer dans le cas de la mise en oeuvre de résines thermoplastiques. Suivant les températures de chauffage utilisées, la gaine anti-adhérente peut avoir tendance à se dégrader rapidement. Le chauffage laser peut avoir tendance à détériorer la colle utilisée pour le collage de la gaine et conduire à un désassemblage de la gaine et du cylindre en matériau souple. Par ailleurs, la couche de colle détériorée absorbe le rayonnement laser et peut monter à des températures importantes pouvant détériorer la gaine.

Lors du drapage, une combustion de la résine de préimprégnation de fibres peut apparaitre. Les fumées de combustion ont tendance à former des dépôts sur la gaine. Outre la problématique de l'encrassement de la gaine, ces dépôts absorbent le rayonnement laser et peuvent conduire à la destruction de la gaine.

Les documents US2007/187021 et FR3009510 divulguent des têtes d'application de fibres selon le préambule de la revendication 1. Dans le document FR 3009510, il a été proposé de prévoir des buses de soufflage pour diffuser un gaz inerte préalablement chauffé, tel que de l'azote, pour former localement une atmosphère protectrice et éviter une oxydation des résines. Cette diffusion d'azote représente un coût non négligeable. Par ailleurs, cette diffusion d'azote ne permet pas la présence d'un opérateur dans la cellule de drapage en cours de drapage, et nécessite un renouvellement de l'air de la cellule avant d'en permettre l'accès.

Le but de la présente invention est de proposer une solution visant à pallier au moins un des inconvénients précités, qui permet notamment la mise en oeuvre d'une grande variété de résines, tant thermodurcissables que thermoplastiques, avec un compactage sensiblement uniforme de la bande appliquée, et qui soit simple de conception et de réalisation.

A cet effet, la présente invention propose une tête d'application de fibres pour la réalisation de pièces en matériau composite, comprenant un système de compactage comprenant un rouleau de compactage, appelé également rouleau d'application, pour l'application d'une ou plusieurs fibres, en particulier d'une bande formée d'une ou plusieurs fibres plates, sur une surface d'application, et un système de chauffage apte à émettre un rayonnement thermique en direction de la ou des fibres en direction de la bande, de préférence juste avant application par le rouleau d'application, ladite tête comprend en outre un système de soufflage comprenant une buse de soufflage d'air connectée à un système d'alimentation en air, ladite buse étant disposée en amont du rouleau par rapport à la direction de déplacement, et est apte à former une lame d'air, parallèle à l'axe du rouleau, présentant une longueur au moins égale à la moitié de la longueur du rouleau en direction de la zone de pincement entre le rouleau de compactage et la surface de drapage.

Selon l'invention, la tête comprend une buse de soufflage délivrant une lame d'air en direction de la zone de pincement, appelée également zone de contact, de manière à limiter voire supprimer tout dépôt de fumées de combustion sur la surface extérieure du rouleau. La lame d'air permet d'éteindre par soufflage les flammes de combustion, voire de souffler tout départ de flamme de combustion. Selon l'invention, il est possible de souffler les flammes avec une lame d'air tout en garantissant, malgré le débit d'air important, une qualité de drapage de fibres satisfaisant, et un chauffage efficace de la ou des fibres drapées, notamment avec un système de chauffe de type laser, sans nécessiter de chauffer préalablement l'air pour former la lame d'air.

Ce système de soufflage selon l'invention permet de protéger efficacement des rouleaux souples, et notamment leurs gaines antiadhérentes extérieures, pour l'application de fibres à des températures élevées, notamment supérieure à 400°C, en particulier pour l'application de fibres imprégnées de résines thermoplastiques, notamment avec un système de chauffe de type laser. La tête selon l'invention, qui comprend un rouleau de compactage simple de conception, offre la possibilité d'utiliser une grande variété de résines thermodurcissables ou thermoplastiques combinées à une grande variété de fibres, synthétiques ou naturelles, hybrides ou non, notamment des fibres couramment employées dans le domaine des composites, telles que les fibres de verre, les fibres de carbone, de quartz, et d'aramide.

Selon un mode de réalisation, la buse de soufflage comprend fente longitudinale de décharge disposée parallèlement à l'axe du rouleau, ou une pluralité d'orifices disposés selon une ligne parallèle à l'axe du rouleau. Cette disposition parallèle permet d'assurer une lame d'air à un débit important, suffisant pour souffler les flammes, sans altérer la qualité de drapage des fibres, notamment sans déplacer les fibres en fin de trajectoire.

Selon l'invention, le système de soufflage est apte à former une lame d'air présentant une longueur au moins égale à la moitié de la longueur du rouleau, la lame d'air étant de préférence centrée par rapport au rouleau.

Selon un mode de réalisation, le système de soufflage est apte à délivrer une lame d'air à un débit d'au moins 300 Nl/min, de préférence d'au moins 500 Nl/min, mieux encore d'au moins 600 Nl/min, par exemple d'environ 700Nl/min.

Selon un mode de réalisation, le système de soufflage est apte à délivrer une lame d'air à un débit d'au moins 50 Nl/min par centimètre de lame d'air en longueur, de préférence d'au moins 100 Nl/min, mieux encore d'au moins 120 Nl/min.

Selon un mode de réalisation, la buse de soufflage d'air est connectée à une source d'alimentation formée d'une source d'air comprimé ou à une turbine, de préférence embarquée sur ladite tête, délivrant de l'air pulsé.

Selon un mode de réalisation, le système de soufflage comprend plusieurs buses de soufflage disposées côte à côte, chaque buse étant connectée à une source d'air comprimée ou à une turbine.

Selon un mode de réalisation, ledit rouleau de compactage comprend un tube central rigide par lequel ledit rouleau est monté rotatif sur une structure support de la tête et au moins une pièce cylindrique réalisée en un matériau souple, déformable élastiquement, assemblée coaxialement, directement ou indirectement, sur ledit tube central, et une gaine anti-adhérente recouvrant la pièce cylindrique, ladite gaine antiadhérente présente des parties latérales s'étendant au-delà de la surface cylindrique de la pièce cylindrique en direction de l'axe de rotation du rouleau, l'assemblage de ladite gaine à ladite pièce cylindrique étant réalisé par lesdites parties latérales, lesdites parties latérales effectuant un blocage en translation et rotation de la gaine par rapport à ladite pièce cylindrique. La gaine de protection est assemblée par des parties latérales, en dehors de la zone de chauffe. Cet assemblage permet d'éviter un collage de la gaine au niveau de la zone de chauffe et donc d'éviter tout risque de détérioration de la gaine liée à une détérioration du collage due aux rayonnements. Cet assemblage de la gaine combinée à la buse de soufflage garantit une bonne stabilité de la gaine.

Selon un mode de réalisation, ledit rouleau de compactage comprend une pièce cylindrique en un matériau élastomère, de préférence non expansé, par exemple un silicone ou un polyuréthane, de préférence en silicone, présentant de préférence une dureté comprise entre 25 shore A et 80 shore A, de préférence d'au moins 40 shore A, afin de garantir une bonne tenue de la gaine dans le temps.

Selon un mode de réalisation, le rouleau de compactage comprend une pièce cylindrique en mousse, par exemple un élastomère expansé tel qu'une mousse polyuréthane, présentant de préférence une densité comprise entre 200 kg/m³ et 500 kg/m³.

Ladite gaine anti-adhérente est avantageusement formée d'un fluoropolymère, de préférence un fluoropolymère choisi dans le groupe constitué par un polytetrafluoroethylène (PTFE), un perfluoroalkoxy (PFA), un éthylène propylène fluoré (FEP), un éthylène tétrafluoroéthylène (ETFE), de préférence un PFA ou un FEP, et un fluoroélastomère, par exemple un FPM, FFPM ou un FEPM, ou un polyimide.

Selon un mode de réalisation, ladite gaine anti-adhérente est thermoformée sur la pièce cylindrique, de préférence thermorétractée, les parties latérales thermoformées assurant au moins en partie le blocage en rotation et en translation de la gaine. L'utilisation d'une gaine thermorétractable permet un assemblage simple et rapide de la gaine en partant d'une gaine sous forme de tube qui est par la suite thermorétractée sur la pièce cylindrique.

Selon un mode de réalisation, ledit tube central est muni de trous radiaux, ladite pièce cylindrique en matériau souple ayant des moyens de communication fluidique aptes à mettre en communication fluidique lesdits trous radiaux avec la surface cylindrique externe de la pièce cylindrique, ladite tête comprenant des moyens de régulation thermique aptes à injecter un flux gazeux de régulation thermique, avantageusement un gaz à température ambiante ou refroidi, en particulier de l'air, dans le passage interne du tube central, ledit rouleau comprend une couche intermédiaire drainante intercalée entre la gaine anti-adhérente et la pièce cylindrique, ladite couche intermédiaire assurant l'évacuation du fluide de régulation thermique par les faces latérales du rouleau. L'utilisation d'une telle couche drainante combinée à un système de refroidissement par l'intérieur permet de maintenir efficacement la gaine et la pièce cylindrique à des températures raisonnables, inférieures aux températures de détérioration des matériaux utilisés.

Ladite couche intermédiaire est formée de préférence à partir de fibres de verre, de fibres de carbone, de fibres ou fils métalliques, par exemple de cuivre ou d'inox, ou de fibres polymères, par exemple de fibres PAN, fibres PEEK, ladite couche pouvant se présenter sous la forme d'un feutre de fibres non tissé et/ou sous la forme d'un tissu. L'épaisseur et le grammage de la couche intermédiaire sont définies de manière à assurer un passage de flux gazeux suffisant pour évacuer les calories. Dans le cas de fibres de verre, la couche intermédiaire forme un écran isolant, limitant la montée en température par conduction de la pièce cylindrique en matériau souple. Dans le cas de fibres métalliques, la couche intermédiaire forme un écran au rayonnement émis par le système de chauffage.

De préférence, lesdits moyens de communication fluidique comprennent des canaux radiaux, chaque canal radial débouchant sur un trou radial du tube central et sur la surface externe de la pièce cylindrique. Les trous radiaux sont répartis sur la paroi cylindrique du tube central. Le tube central présente par exemple plusieurs ensembles de trous décalés longitudinalement le long de l'axe du rouleau de compactage, chaque ensemble comprenant une pluralité de trous ménagés à espace angulaire régulier.

Selon des modes de réalisation,
- ladite couche intermédiaire comprend des fibres verre de préférence sous la forme d'un tissu, par exemple sous forme de manchon ou tresse ;
- la couche intermédiaire présente des parties d'extrémité s'étendant au-delà de la surface cylindrique de la pièce cylindrique, de manière à garantir l'évacuation de gaz injecté ;
- chaque partie latérale de la gaine est assemblée par sa portion d'extrémité annulaire à des moyens mécaniques d'assemblage ; et/ou
- chaque partie latérale de la couche intermédiaire est assemblée par sa portion d'extrémité annulaire à des moyens mécaniques d'assemblage, les moyens mécaniques peuvent comprendre deux rondelles assemblées l'une à l'autre par des moyens d'assemblage, telles que des vis, et entre lesquelles la portion d'extrémité de la gaine et/ou de la couche intermédiaire est enserrée ; et/ou
- le rouleau présente à chaque extrémité une partie définissant une surface incurvée ou inclinée disposée dans le prolongement de la surface cylindrique, afin d'obtenir un pliage progressif de la gaine, cette partie étant formée d'une pièce ajoutée à la pièce cylindrique ou étant monobloc avec la partie cylindrique de la pièce cylindrique.

Les moyens mécaniques peuvent être utilisés seuls ou en combinaison avec le thermoformage de la gaine, pour assembler la gaine et/ou la couche intermédiaire drainante. Selon un mode de réalisation, la gaine est thermoformée et seule la couche intermédiaire est assemblée via des moyens mécaniques. Des moyens mécaniques distincts peuvent être utilisés pour la gaine et pour la couche intermédiaire. Selon un autre mode de réalisation, la couche intermédiaire est collée sur la pièce cylindrique, au niveau de la surface cylindrique et/ou des faces latérales.

Selon un mode de réalisation, la tête constitue une tête de placement de fibres comprenant des moyens de coupe et des moyens de réacheminement, et éventuellement de moyens de blocage de fibres. Selon un mode de réalisation la tête est utilisée pour effectuer une application de type enroulement filamentaire.

Selon un mode de réalisation, la tête comprend un système de chauffe de type laser, notamment des diodes laser, un laser YAG ou un laser à fibre, apte à émettre un faisceau laser en direction de la zone de contact entre le rouleau et une surface de drapage. Malgré le débit d'air important de la lame d'air, un chauffage efficace des fibres peut être obtenu par le système de chauffe de type laser. En variante, le système de chauffage peut comprendre une ou plusieurs lampes infrarouges.

Selon un mode de réalisation, la tête comprend en outre un système de soufflage secondaire comprenant une buse secondaire de soufflage d'air, ladite buse secondaire étant disposée en aval du rouleau par rapport à la direction de déplacement, et est apte à former une lame d'air, parallèle à l'axe du rouleau, en direction du rouleau de compactage, pour refroidir le rouleau par l'extérieur et ainsi limiter la montée en température du rouleau. L'utilisation d'une telle lame d'air avec un débit important permet de refroidir efficacement le rouleau de compactage.

Le système de soufflage secondaire est similaire, voire identique au système de soufflage précité disposé en amont du rouleau :
- la buse secondaire comprend fente longitudinale de décharge disposée parallèlement à l'axe du rouleau, ou une pluralité d'orifices disposés selon une ligne parallèle à l'axe du rouleau, et/ou est connectée à une source d'alimentation formée d'une source d'air comprimé ou à une turbine délivrant de l'air pulsé, et/ou
- le système de soufflage secondaire est apte à former une lame d'air présentant une longueur au moins égale à moitié de la longueur du rouleau, et/ou est apte à délivrer une lame d'air à un débit d'au moins 300 Nl/min, de préférence d'au moins 500 Nl/min, mieux encore d'au moins 600 Nl/min, et/ou est apte à délivrer une lame d'air à un débit d'au moins 50 Nl/min par centimètre de lame d'air en longueur, de préférence d'au moins 100 Nl/min, mieux encore d'au moins 120 Nl/min.

La présente invention a également pour objet un procédé de fabrication d'une pièce en matériau composite comprenant l'application de fibres continues sur une surface d'application, caractérisé en ce que l'application de fibres est réalisée au moyen d'une tête d'application de fibres tel que décrit précédemment, par déplacement relatif de la tête d'application par rapport à la surface de drapage selon des trajectoires de dépose les fibres étant compactées lors de leur application au moyen dudit rouleau d'application, ladite buse formant lors du drapage une lame d'air, en direction de la zone de pincement entre le rouleau de compactage et la surface de drapage, de manière à souffler les flammes de combustion, à savoir d'éteindre par soufflage les flammes de combustion, voire de souffler tout départ de flamme de combustion.

Les fibres classiquement utilisées sont des fibres plates continues, appelées également mèches, généralement unidirectionnelles, et comprenant une multitude de filaments. Les fibres déposées peuvent être des fibres sèches ou des fibres pré-imprégnées de résine thermodurcissable ou thermoplastique. Les fibres présentent typiquement des largeurs de 1/8, 1/4 ou 1/2 pouces, 1 pouce correspondant à 2.54 cm.

Dans la présente, le terme «fibres » désigne également des fibres de plus grande largeur, supérieure à 1/2 pouce, classiquement appelée bande dans la technologie du placement.

Le procédé selon l'invention est particulièrement avantageux dans le cas de la réalisation de préformes sèches réalisées à partir de fibres sèches munies d'un liant et/ou de préformes thermoplastiques réalisées à partir de fibres pré-imprégnées de résine thermoplastique, nécessitant des températures de chauffage importante lors du drapage pour au moins atteindre le point de fusion du liant et/ou des résines thermoplastiques.

Dans le cas d'une préforme sèche, le procédé comprend en outre une étape d'imprégnation de résine dans la préforme sèche, par ajout d'une ou plusieurs résines d'imprégnation par infusion ou injection à la préforme sèche, et une étape de durcissement pour obtenir une pièce en matériau composite. Dans le cas d'une préforme thermoplastique, la préforme peut éventuellement être soumise à une étape de consolidation supplémentaire pour obtenir une pièce finale en matériau composite. Une consolidation in situ peut également être obtenue lors de l'application des fibres.

L'application de fibres peut être effectuée sur la surface d'application d'un outillage pour former une préforme, tel que décrit précédemment, par placement de fibre, placement de bande, et/ou bobinage. Selon un autre mode de réalisation, l'application de fibres est réalisée directement sur la surface d'application d'une pièce préfabriquée, pour renforcer cette pièce avec des renforts de fibres unidirectionnelles, la pièce préfabriquée étant par exemple une pièce obtenue par injection, moulage ou fabrication additive, à partir d'une ou plusieurs résines thermoplastiques et/ou thermodurcissables.

Selon un mode de réalisation, l'application de fibres est réalisée avec une lame d'air à un débit d'au moins 300 Nl/min, de préférence d'au moins 500 Nl/min, mieux encore d'au moins 600 Nl/min, et/ou à un débit d'au moins 50 Nl/min par centimètre de lame d'air en longueur, de préférence d'au moins 100 Nl/min, mieux encore d'au moins 120 Nl/min.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique de côté d'une tête d'application de fibres selon l'invention, illustrant le rouleau de compactage, le système de chauffage et le système de soufflage ;
- la figure 2 est une vue partielle agrandie de la figure 1 ;
- la figure 3 est une vue schématique en perspective, avec un arraché partiel, du rouleau de compactage de la figure 1 ;
- la figure 4 est une vue en perspective d'un rouleau de compactage avec un arraché partiel, selon un deuxième mode de réalisation ;
- la figure 5 est une vue en perspective d'un rouleau de compactage selon un troisième mode de réalisation ;
- la figure 6 est une vue en perspective d'un rouleau de compactage, avec un arraché partiel, selon un quatrième mode de réalisation ;
- la figure 7 est une vue en perspective d'un rouleau de compactage, avec un arraché partiel, selon un cinquième mode de réalisation ;
- la figure 8 est une vue en perspective d'un rouleau de compactage, avec un arraché partiel, selon un sixième mode de réalisation ; et,
- la figure 9 est une vue analogue à celle de la figure 2, illustrant une tête d'application de fibres selon une variante de réalisation, comprenant un système de soufflage secondaire.

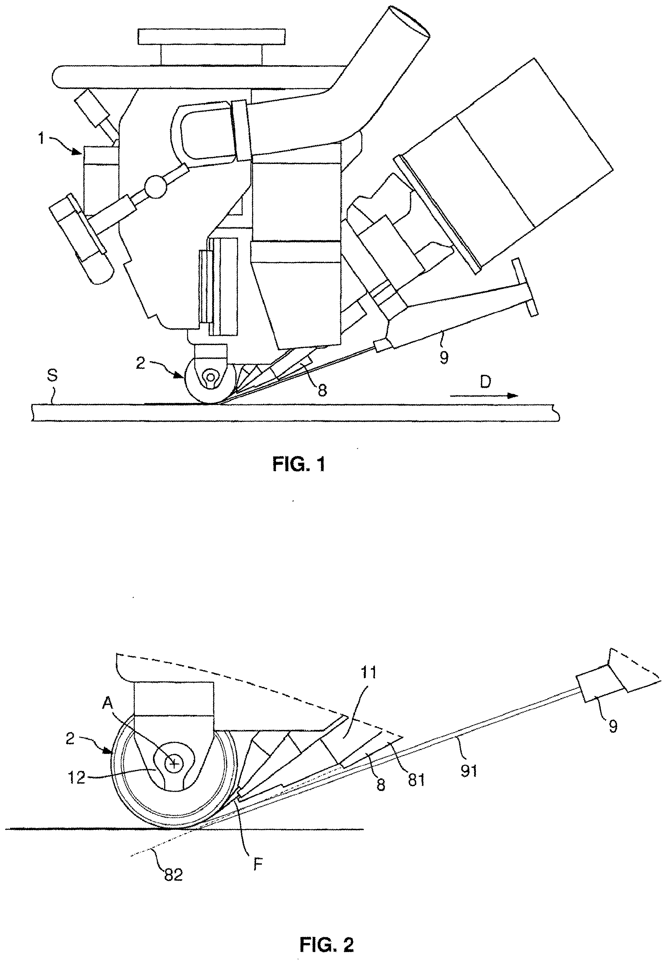

En référence aux figures 1 et 2, la tête d'application 1 comporte un rouleau de compactage 2 qui est monté rotatif autour d'un axe A sur une structure support de la tête. La tête est prévue pour l'application d'une bande formée de plusieurs fibres disposées côte à côte. La tête est montée par ladite structure support à l'extrémité d'un système de déplacement, par exemple un poignet de robot. La tête comprend en outre un système de chauffage 9 monté également sur la structure support, en amont du rouleau par rapport à la direction d'avancement D de la tête d'application lors de l'application de la bande de fibres F sur une surface d'application S. Le dispositif de chauffage est par exemple un système de chauffage de type laser, dont le rayonnement est dirigé en direction de la bande, juste avant son compactage, ainsi que vers la ou les bandes déjà déposées.

Tel qu'illustré à la figure 1, le rayonnement 91 est ainsi dirigé obliquement vers la zone de pincement ou zone de contact entre le rouleau d'application et la surface d'application, pour chauffer une section de bande disposée sur le rouleau, avant son compactage par ce dernier, ainsi que la surface d'application et/ou une ou plusieurs bandes préalablement appliquées.

Dans le cas d'une machine de placement de fibres, la tête comprend des moyens de guidage 11 qui guident les fibres entrant dans la tête vers le rouleau de compactage 2 sous la forme d'une bande de fibres, les fibres de la bande étant disposées côte à côte de manière sensiblement jointives. Par déplacement de la tête par le robot, le rouleau de compactage est amené en contact avec la surface d'application d'un moule S pour appliquer la bande.

Les fibres sont de préférence des fibres continues plates, de type mèches, pré-imprégnées d'une résine thermodurcissable ou d'une résine thermoplastiques, ou des fibres sèches munies d'un liant. Le liant est sous forme de poudre et/ou d'un ou plusieurs voiles, de préférence de type thermoplastique.

Selon l'invention, la tête comprend en outre un système de soufflage 8, comprenant une buse 81 montée également sur la structure support, en amont du rouleau par rapport à la direction d'avancement D, apte à émettre une lame d'air comprimé en direction de la zone de contact. La buse forme une lame d'air, parallèle à l'axe du rouleau, centrée selon une direction illustrée de manière schématique sous la référence 82. La buse est par exemple connectée à un circuit d'alimentation en air comprimé.

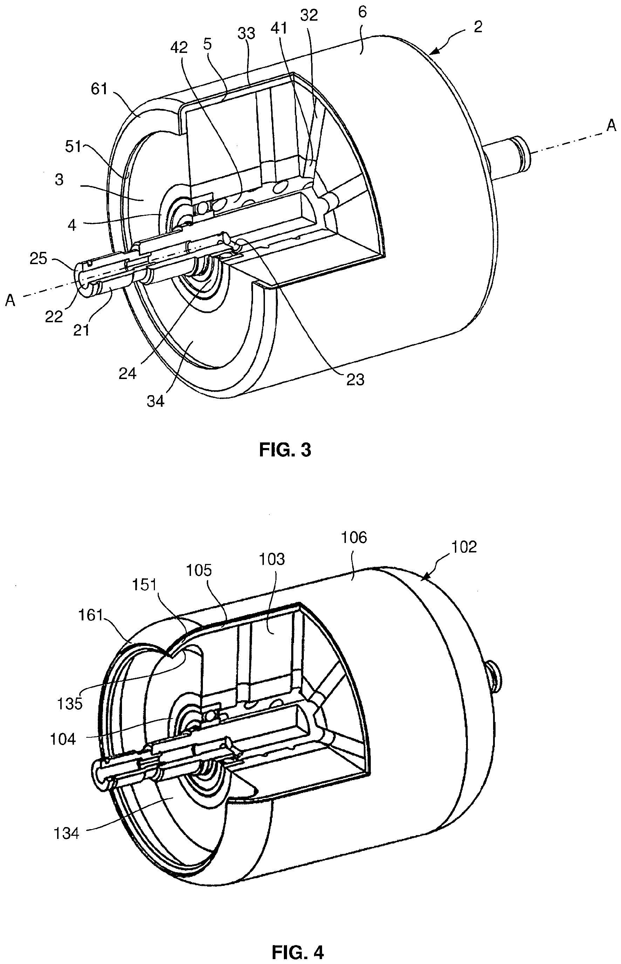

En référence à la figure 3, le rouleau de compactage 2 comprend une pièce ou corps cylindrique 3 en un matériau souple, élastiquement déformable par compression. La pièce cylindrique présente un passage central cylindrique pour son assemblage sur un noyau support formé d'un tube central 4 rigide cylindrique, par exemple métallique, tel qu'en aluminium. La pièce cylindrique 3 et le tube central 4 sont coaxiaux et sont solidaires en rotation l'un de l'autre. La pièce cylindrique comprend ici une seule partie cylindrique avec une surface cylindrique 33 et deux faces latérales 34.

La pièce cylindrique 3 en matériau souple confère au rouleau de compactage une capacité d'écrasement qui permet au rouleau de compactage de s'adapter aux variations de courbure de la surface d'application et ainsi d'appliquer une pression sensiblement uniforme sur l'ensemble de la bande déposée. Le tube rigide permet le montage rotatif du rouleau sur la structure support.

La pièce cylindrique est par exemple constituée d'un élastomère non expansé, tel qu'un silicone ou polysiloxane, ou un polyuréthane, de préférence un silicone, par exemple un silicone bi-composant polymérisable à température ambiante. La pièce cylindrique présente une dureté comprise entre 30 shore A et 70 shore A, par exemple de 40, 50 ou 60 shore A, qui sera choisie en fonction du taux d'écrasement souhaité du rouleau pour un effort de compactage donné, ce taux d'écrasement étant notamment défini en fonction de la complexité de la surface d'application.

Le tube central est muni de trous radiaux 41, par exemple cylindrique, traversant la paroi cylindrique du tube central de part en part. Les trous radiaux débouchent ainsi sur le passage interne 42 du tube central et sur la pièce cylindrique. Cette dernière est munie de canaux radiaux 32, alignés avec lesdits trous radiaux 41, et présentant des diamètres sensiblement identiques à ceux desdits trous radiaux. Chaque canal radial 32 débouche sur la surface cylindrique 33 externe de la pièce cylindrique 3. A titre d'exemple, le tube central comprend six ensembles de trous radiaux 41 décalé longitudinalement le long de l'axe A du rouleau, chaque ensemble comprend plusieurs trous radiaux disposés à espace angulaire régulier, par exemple huit trous radiaux à 45° les uns des autres. La pièce cylindrique comprend alors six ensembles de canaux radiaux 32 comprenant chacun huit canaux radiaux à 45° les uns des autres.

La pièce cylindrique est revêtue d'une couche intermédiaire 5 drainante, formée ici d'un tissu de fibres de verre, par exemple sous la forme d'un manchon ou tresse. La couche intermédiaire présente une certaine élasticité pour suivre les déformations de la pièce cylindrique lors de la mise en appui du rouleau contre la surface d'application.

La couche intermédiaire est revêtue extérieurement d'une gaine anti-adhérente 6 extérieure, formée ici d'un film PFA thermo-rétracté sur la surface la pièce cylindrique, avec la couche intermédiaire drainante intercalée entre la pièce cylindrique et la gaine. La gaine anti-adhérente par laquelle le rouleau est en contact avec la bande, limite l'adhérence du rouleau aux fibres, ainsi que l'encrassement du rouleau.

La gaine anti-adhérente présente des parties latérales 61 s'étendant au-delà de la surface cylindrique le long des faces latérales 34 de la pièce cylindrique.

La gaine anti-adhérente est formée à partir d'un film tubulaire de longueur supérieure à celle de la pièce cylindrique, qui est emmanchée sur la pièce cylindrique puis thermoformée, de sorte que les parties latérales viennent se plaquer au moins partiellement sur le long des faces latérales. Les parties latérales ainsi thermorétractées assurent le blocage en translation et en rotation de la gaine anti-adhérente et de la couche intermédiaire sur la pièce cylindrique.

La couche intermédiaire 5 présente également des parties latérales 51 s'étendant au-delà de la surface cylindrique et qui s'intercalent entre les faces latérales 34 et les parties latérales 61 thermorétractées de la gaine.

Le montage du rouleau sur la tête est réalisé au moyen d'une tige axiale 21 montée dans le passage interne du tube central 4 par l'intermédiaire de deux roulements à billes 24, le tube central présentant avantageusement à chaque extrémité un lamage pour le montage d'un roulement. Le rouleau est ensuite monté par les extrémités de la tige axiale entre deux flasques 12 de la structure support de la tête.

La machine comprend des moyens de régulation thermique (non représentés), permettant d'injecter un gaz à température ambiante, comprise entre 15 et 30°C, ou un gaz refroidi à une température inférieure à 15°C, en particulier de l'air, par l'une extrémité de la tige axiale. La tige axiale 21 présente un passage axial 22 débouchant sur l'une 25 des extrémités de la tige, et un alésage radial 23 permettant de mettre en communication fluidique ledit passage axial 22 et le passage interne 42 du tube central, entre les deux roulements, les deux roulements étant des roulement étanches.

En fonctionnement, l'air injecté par au moins l'extrémité ouverte de la tige axiale, arrive dans le passage interne 42 entre les deux roulements étanches, passe dans les trous radiaux 41 puis les canaux radiaux 32 de la pièce cylindrique, puis passe à travers la couche intermédiaire 5 drainante et s'échappe latéralement par les parties latérales 51. Cet air injecté permet de refroidir uniformément, la pièce cylindrique en matériau souple, ainsi que la gaine.

Le système de chauffage de type laser peut comprendre des diodes laser, disposées en une ou plusieurs rangées, émettant un rayonnement de longueur(s) d'onde comprise(s) entre 880 à 1030 nm par exemple, un laser à fibre optique ou un laser YAG, émettant à une longueur d'onde de l'ordre de 1060 nm.

La lame d'air issue du système de soufflage 8 permet de souffler les flammes de combustion de résine, plus précisément d'éteindre par soufflage les flammes pouvant apparaitre lors du chauffage par laser, voire de supprimer par soufflage tout départ de flamme. La lame d'air permet ainsi de limiter voire supprimer toute pollution de la gaine liée à la combustion.

A titre d'exemple, la tête est équipée d'un rouleau de compactage présentant une longueur d'environ 6 cm, prévue pour draper une bande de 8 fibres de 6, 35 mm (1/4"de pouce). La buse comprend une rangée d'orifice de charge formant en sortie de buse une lame d'environ 5 cm. La buse est alimentée en air comprimé à 5 bars, correspond à une lame d'air à un débit d'environ 700 Nl/min.

La figure 4 illustre un deuxième mode de réalisation de l'invention dans lequel le rouleau de compactage 102 comprend comme précédemment un tube central rigide 104 muni de trous radiaux, une pièce cylindrique 103 en matériau souple élastiquement déformable muni de canaux radiaux, une couche intermédiaire 105 avec des parties latérales 151, et une gaine antiadhérente 106 thermoformée avec des parties latérales 161.

Dans ce mode de réalisation, la pièce cylindrique comprend une partie centrale cylindrique se prolongeant latéralement par deux languettes 134 annulaires dont les surfaces extérieures forment avec la surface cylindrique 133 une surface continue. La partie cylindrique et les languettes latérales sont moulées d'une seule pièce, les languettes présentant une surface extérieure cylindrique. Les parties latérales 151, 161 de la couche intermédiaire et de la gaine sont disposées sur lesdites languettes 134. Lors du thermoformage de la gaine, les languettes se replient progressivement vers l'intérieur en direction des faces latérales de la pièce cylindrique, tel qu'illustré sur la figure 4. Les languettes permettent un pliage de la gaine et de la couche intermédiaire sur un angle non vif en extrémité de la pièce cylindrique, et ainsi d'éviter une détérioration de la gaine dans le temps au niveau du pliage.

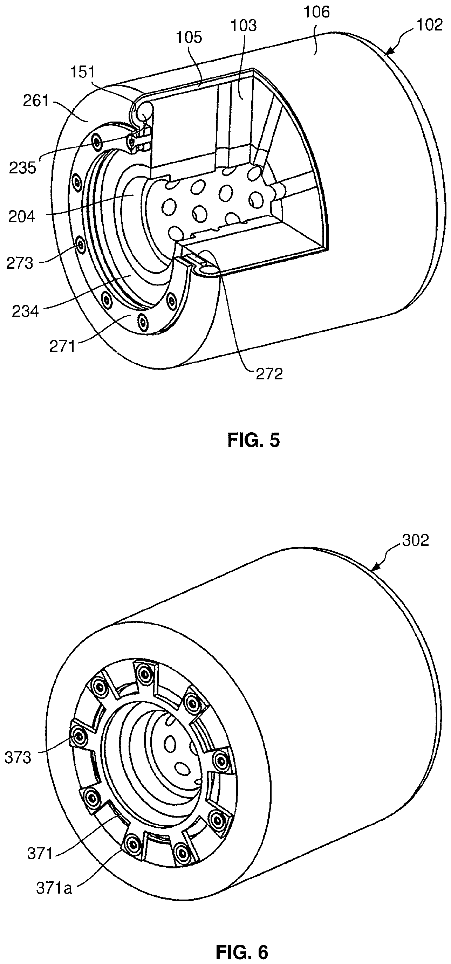

La figure 5 illustre un troisième mode de réalisation de l'invention dans lequel le rouleau de compactage 202 comprend comme précédemment un tube central rigide 204 muni de trous radiaux, une pièce cylindrique 103 en matériau souple élastiquement déformable muni de canaux radiaux, une couche intermédiaire 205 avec des parties latérales 251, et une gaine antiadhérente 206 thermoformée avec des parties latérales 261.

Dans ce mode de réalisation, en remplacement des languettes précitées, le rouleau comprend une pièce ou joint torique 235 disposé contre chaque face latérale 234 de la pièce cylindrique, et la gaine antiadhérente 206 est thermorétractée par-dessus lesdits joints. Les joints présentent un diamètre extérieur égal au diamètre extérieur de la pièce cylindrique et permettent un pliage de la gaine et de la couche intermédiaire sur un angle non vif en extrémité de la pièce cylindrique. De préférence, la pièce cylindrique présente en extrémité une petite languette annulaire pour garantir parfaite continuité de surface entre la surface cylindrique de la pièce cylindrique et les joints.

Par ailleurs, l'assemblage par thermorétractation est ici complété par un assemblage mécanique au moyen de deux rondelles 271, 272 assemblées ensemble au moyen de vis 273 en enserrant entre elles les portions d'extrémité annulaires des parties latérales 251, 261 de la gaine et de la couche intermédiaire.

Les rondelles viennent en appui l'une contre autre par des zones de contact espacées angulairement les unes des autres, pour permettre l'évacuation du flux d'air par les parties latérales de la couche intermédiaire entre deux zones de contact. Pour ce faire, au moins l'une des rondelles ou les deux rondelles sont annelées, ou l'une des rondelles ou les deux rondelles présentent sur leurs faces en vis-à-vis des bossages ou plots répartis à espace angulaire régulier, par exemple au niveau des perçages de la rondelle extérieure et/ou des taraudages de la rondelle intérieure servant pour le vissage des vis, les rondelles étant en appui l'une contre l'autre par lesdits bossages lors du serrage des vis.

La figure 6 illustre un quatrième mode de réalisation d'un rouleau 302 de compactage qui se différencie du rouleau de compactage 202 précédent par le fait que les deux rondelles annulaires 371 présentent des pattes 371a disposées à espace angulaire régulier et s'étendant radialement vers l'extérieur, les deux rondelles sont assemblées l'une à l'autre au moyens de vis 373 vissées au niveaux desdites pattes, en enserrant entre elles les parties d'extrémité de la gaine anti-adhérente et de la couche intermédiaire. Ainsi dans ce mode de réalisation, l'air injecté par l'intérieur du tube s'échappe par chaque zone de parties latérales de la couche intermédiaire disposée entre deux pattes adjacentes.

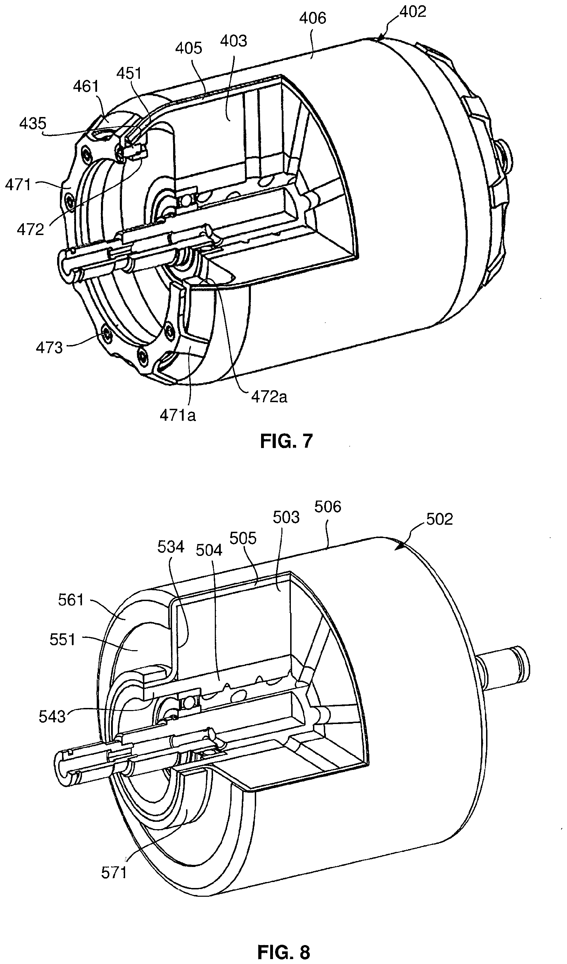

La figure 7 illustre un cinquième mode de réalisation d'un rouleau 402 de compactage qui se différencie du rouleau de compactage 102 illustré à la figure 4 par le fait que, de chaque côté du rouleau, la languette 435 annulaire, la partie latérale 451 de la couche intermédiaire 405, ainsi que la partie latérale 461 de la gaine 406 sont assemblées ensemble par des moyens mécaniques. Ces moyens mécaniques comprennent une rondelle ou couronne 471 extérieure munie à espace angulaire régulier de pattes 471a inclinées, et une rondelle ou bague intérieure 472 munie d'une surface annulaire 472a inclinée, la couronne et la bague étant assemblées l'une à l'autre par des vis 473, de sorte que la languette et les deux parties latérales 451, 461 soient enserrées entre les pattes inclinées et ladite surface inclinées de la bague.

La figure 8 illustre un sixième mode de réalisation qui se différencie du mode de réalisation de la figure 3 par le fait que, de chaque côté du rouleau 502, le tube central 504 présente une portion d'extrémité 543 s'étendant au-delà de la face latérale 533 de la pièce cylindrique 503, la partie latérale 551 de la couche intermédiaire 505 s'étend au-delà de la partie latérale 461 de la gaine antiadhérente 506 thermoformée, sur l'ensemble de la face latérale de la pièce cylindrique 533, et est bloqué sur la portion d'extrémité 543 du tube au moyen d'une bague 571. A titre d'exemple, la bague est sertie ou vissée sur le tube, ou est formée de deux demi-bagues assemblées par vissage.

Dans ce mode de réalisation, la gaine est maintenue en place uniquement par thermoformage, seule la couche intermédiaire est assemblée par des moyens mécaniques.

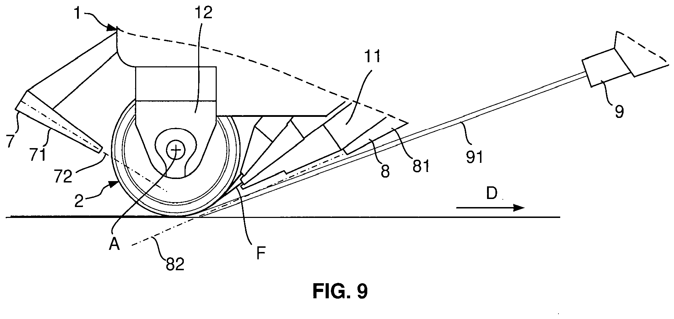

La figure 9 illustre une variante de réalisation dans laquelle la tête comprend en outre un système de soufflage secondaire 7, comprenant une buse secondaire 71 montée sur la structure support, en aval du rouleau par rapport à la direction d'avancement D, apte à émettre une lame d'air comprimé en direction du rouleau. La buse secondaire forme une lame d'air, parallèle à l'axe du rouleau centrée, selon une direction illustrée de manière schématique sous la référence 72. La buse secondaire est par exemple identique à la buse 81 disposée en amont du rouleau, et est connectée au même circuit d'alimentation en air comprimé, la buse étant par exemple alimentée en air comprimé à 5 bars.

## Revendications

1. Tête d'application de fibres pour la réalisation de pièces en matériau composite, comprenant un système de compactage comprenant un rouleau de compactage (2, 102, 202, 302, 402, 502) pour l'application d'une ou plusieurs fibres sur une surface (S) d'application, un système de chauffage (9) apte à émettre un rayonnement thermique en direction de la ou des fibres, et un système de soufflage (8) comprenant une buse de soufflage (81) d'air, ladite buse étant disposée en amont du rouleau par rapport à la direction de déplacement, **caractérisée en ce que** ladite buse de soufflage (81) est apte à former une lame d'air, parallèle à l'axe du rouleau, présentant une longueur au moins égale à la moitié de la longueur du rouleau, en direction de la zone de pincement entre le rouleau de compactage et la surface de drapage.

2. Tête d'application selon la revendication 1, **caractérisée en ce que** la buse de soufflage comprend une fente longitudinale de décharge disposée parallèlement à l'axe du rouleau, ou une pluralité d'orifices disposés selon une ligne parallèle à l'axe du rouleau.

3. Tête d'application selon la revendication 1 ou 2, **caractérisée en ce que** le système de soufflage est apte à délivrer une lame d'air à un débit d'au moins 300 Nl/min, de préférence d'au moins 500 Nl/min, mieux encore d'au moins 600 Nl/min.

4. Tête d'application selon la revendication 1 à 3, **caractérisée en ce que** le système de soufflage est apte à délivrer une lame d'air à un débit d'au moins 50 Nl/min par centimètre de lame d'air en longueur, de préférence d'au moins 100 Nl/min, mieux encore d'au moins 120 Nl/min.

5. Tête d'application selon l'une des revendications 1 à 4, **caractérisée en ce que** la buse de soufflage (81) d'air est connectée à une source d'alimentation formée d'une source d'air comprimé ou à une turbine délivrant de l'air pulsé.

6. Tête d'application selon l'une des revendications 1 à 5, **caractérisée en ce que** ledit rouleau de compactage comprend un tube central (4) rigide et au moins une pièce cylindrique (3, 103, 203, 403, 503) réalisée en un matériau souple, déformable élastiquement, assemblée sur ledit tube central, et une gaine anti-adhérente (6, 106, 206, 406, 506) recouvrant la pièce cylindrique, ladite gaine anti-adhérente présente des parties latérales (61, 161, 261, 461, 561) s'étendant au-delà de la surface cylindrique (33) de la pièce cylindrique en direction de l'axe (A) de rotation du rouleau, l'assemblage de ladite gaine anti-adhérente à ladite pièce cylindrique étant réalisé par lesdites parties latérales.

7. Tête selon la revendication 6, **caractérisée en ce que** ladite gaine anti-adhérente (6, 106, 206, 406, 506) est thermoformée sur la pièce cylindrique, les parties latérales thermoformées assurant au moins en partie le blocage en rotation et en translation de la gaine.

8. Tête selon la revendication 6 ou 7, **caractérisée en ce que**
- ledit tube central (4) est muni de trous radiaux (41), ladite pièce cylindrique en matériau souple ayant des moyens de communication fluidique (32) aptes à mettre en communication fluidique lesdits trous radiaux avec la surface cylindrique (33) externe de la pièce cylindrique, ladite tête comprenant des moyens de régulation thermique aptes à injecter un flux gazeux de régulation thermique dans le passage interne du tube central,
- ledit rouleau comprend une couche intermédiaire (5, 105, 205, 405, 505) drainante intercalée entre la gaine anti-adhérente et la pièce cylindrique, ladite couche intermédiaire assurant l'évacuation du fluide de régulation thermique par les faces latérales du rouleau.

9. Tête selon l'une des revendications 1 à 8, **caractérisée en ce qu'**elle comprend un système de chauffe de type laser apte à émettre un faisceau laser en direction de la zone de contact entre le rouleau et une surface de drapage.

10. Tête selon l'une des revendications 1 à 9, **caractérisée en ce qu'**elle comprend en outre un système de soufflage secondaire (7) comprenant une buse secondaire de soufflage (71) d'air, ladite buse secondaire étant disposée en aval du rouleau par rapport à la direction de déplacement, et est apte à former une lame d'air, parallèle à l'axe du rouleau, en direction du rouleau de compactage.

11. Procédé de fabrication d'une pièce en matériau composite comprenant l'application de fibres continues sur une surface d'application, **caractérisé en ce que** l'application de fibres est réalisée au moyen d'une tête d'application de fibres selon l'une des revendications 1 à 10, par déplacement relatif de la tête d'application par rapport à la surface de drapage selon des trajectoires de dépose, ladite buse formant lors du drapage une lame d'air, parallèle à l'axe du rouleau, présentant une longueur au moins égale à la moitié de la longueur du rouleau, en direction de la zone de pincement entre le rouleau de compactage et la surface de drapage, de manière à souffler les flammes de combustion.

12. Procédé selon la revendication 11, **caractérisé en ce que** l'application de fibres est réalisée avec une lame d'air à un débit d'au moins 300 Nl/min, de préférence d'au moins 500 Nl/min, mieux encore d'au moins 600 Nl/min.

13. Procédé selon la revendication 12 ou 13, **caractérisé en ce que** l'application de fibres est réalisée avec une lame d'air à un débit d'au moins 50 Nl/min par centimètre de lame d'air en longueur, de préférence d'au moins 100 Nl/min, mieux encore d'au moins 120 Nl/min.

## Patentansprüche

1. Faserauftragskopf für die Herstellung von Werkstücken aus Verbundmaterial, umfassend ein Verdichtungssystem, das eine Verdichtungswalze (2, 102, 202, 302, 402, 502) zum Auftragen einer oder mehrerer Fasern auf eine Auftragsoberfläche (S) umfasst, ein Heizsystem (9), das geeignet ist, Wärmestrahlung in Richtung der Faser(n) abzugeben, und ein Blassystem (8), das eine Luftblasdüse (81) umfasst, wobei die Düse in Bezug auf die Bewegungsrichtung vor der Walze angeordnet ist, **dadurch gekennzeichnet, dass** die Blasdüse (81) geeignet ist, ein Luftmesser parallel zur Achse der Walze mit einer Länge von mindestens der Hälfte der Länge der Walze in Richtung der Quetschzone zwischen der Verdichtungswalze und der Drapierfläche zu bilden.

2. Auftragskopf nach Anspruch 1, **dadurch gekennzeichnet, dass** die Blasdüse einen parallel zur Achse der Walze angeordneten längsgerichteten Ausstoßschlitz oder eine Vielzahl von Öffnungen umfasst, die in einer Linie parallel zur Achse der Walze angeordnet sind.

3. Auftragskopf nach Anspruch 1 oder 2, **dadurch gekennzeichnet, dass** das Blassystem geeignet ist, ein Luftmesser mit einer Rate von mindestens 300 Nl/min, vorzugsweise mindestens 500 Nl/min, noch bevorzugter mindestens 600 Nl/min, abzugeben.

4. Auftragskopf nach Anspruch 1 bis 3, **dadurch gekennzeichnet, dass** das Blassystem geeignet ist, ein Luftmesser mit einer Rate von mindestens 50 Nl/min pro Zentimeter Luftmesser in Längsrichtung, vorzugsweise mindestens 100 Nl/min, noch bevorzugter mindestens 120 Nl/min, abzugeben.

5. Auftragskopf nach einem der Ansprüche 1 bis 4, **dadurch gekennzeichnet, dass** die Luftblasdüse (81) mit einer Versorgungsquelle verbunden ist, die aus einer Druckluftquelle oder einer Turbine, die gepulste Luft liefert, gebildet ist.

6. Auftragskopf nach einem der Ansprüche 1 bis 5, **dadurch gekennzeichnet, dass** die Verdichtungswalze ein starres Mittelrohr (4) und mindestens ein zylindrisches Stück (3, 103, 203, 403, 503) aus einem flexiblen, elastisch verformbaren Material, das auf das Mittelrohr montiert ist, und eine Antihaftummantelung (6, 106, 206, 406, 506), die das zylindrische Stück bedeckt, umfasst, wobei die Antihaftummantelung Seitenteile (61, 161, 261, 461, 561) aufweist, die sich über die zylindrische Oberfläche (33) des zylindrischen Stücks hinaus in Richtung der Drehachse (A) der Walze erstrecken, wobei die Verbindung der Antihaftummantelung mit dem zylindrischen Stück durch die Seitenteile hergestellt wird.

7. Kopf nach Anspruch 6, **dadurch gekennzeichnet, dass** die Antihaftummantelung (6, 106,206,406, 506) auf dem zylindrischen Stück warmgeformt ist, wobei die warmgeformten Seitenteile mindestens teilweise gewährleisten, dass die Drehung und Translation der Ummantelung blockiert wird.

8. Kopf nach Anspruch 6 oder 7, **dadurch gekennzeichnet, dass**
- das Mittelrohr (4) mit radialen Löchern (41) versehen ist, wobei das zylindrische Stück aus flexiblem Material Fluidverbindungsmittel (32) aufweist, die geeignet sind, die radialen Löcher mit der äußeren zylindrischen Oberfläche (33) des zylindrischen Stücks in Fluidverbindung zu bringen, wobei der Kopf Wärmeregulierungsmittel umfasst, die geeignet sind, einen Wärmeregulierungsgasstrom in den inneren Durchgang des Mittelrohrs zu injizieren,
- die Walze eine Drainagezwischenschicht (5, 105, 205, 405, 505) umfasst, die zwischen der Antihaftummantelung und dem zylindrischen Stück angeordnet ist, wobei die Zwischenschicht die Ableitung des Wärmeregulierungsfluids über die Seitenflächen der Walze gewährleistet.

9. Kopf nach einem der Ansprüche 1 bis 8, **dadurch gekennzeichnet, dass** er ein Heizsystem vom Lasertyp umfasst, das geeignet ist, einen Laserstrahl in Richtung des Kontaktbereichs zwischen der Walze und einer Drapierfläche auszugeben.

10. Kopf nach einem der Ansprüche 1 bis 9, **dadurch gekennzeichnet, dass** er außerdem ein sekundäres Blassystem (7) umfasst, das eine sekundäre Luftblasdüse (71) umfasst, wobei die sekundäre Düse in Bezug auf die Bewegungsrichtung hinter der Walze angeordnet und geeignet ist, ein Luftmesser parallel zur Achse der Walze in Richtung der Verdichtungswalze zu bilden.

11. Verfahren zur Herstellung eines Werkstücks aus Verbundmaterial, das das Aufbringen von Endlosfasern auf eine Auftragsfläche umfasst, **dadurch gekennzeichnet, dass** das Aufbringen der Fasern mittels eines Faserauftragskopfes nach einem der Ansprüche 1 bis 10 durch Relativbewegung des Auftragskopfes in Bezug auf die Drapierfläche entlang von Ablagepfaden erfolgt, wobei die Düse beim Drapieren ein Luftmesser parallel zur Achse der Walze mit einer Länge von mindestens der Hälfte der Walzenlänge in Richtung der Quetschzone zwischen der Verdichtungswalze und der Drapierfläche bildet, um die Verbrennungsflammen auszublasen.

12. Verfahren nach Anspruch 11, **dadurch gekennzeichnet, dass** das Aufbringen von Fasern mit einem Luftmesser mit einer Rate von mindestens 300 Nl/min, vorzugsweise mindestens 500 Nl/min, noch bevorzugter mindestens 600 Nl/min, durchgeführt wird.

13. Verfahren nach Anspruch 12 oder 13, **dadurch gekennzeichnet, dass** das Aufbringen von Fasern mit einem Luftmesser mit einer Rate von mindestens 50 Nl/min pro Zentimeter Luftmesser in Längsrichtung, vorzugsweise mindestens 100 Nl/min, noch besser mindestens 120 Nl/min, durchgeführt wird.

## Claims

1. Fibre application head for producing composite material parts, comprising a compacting system comprising a compacting roller (2,102, 202, 302, 402, 502) for the application of one or more fibres onto an application surface (S), a heating system (9) capable of emitting thermal radiation towards the fibre(s), and a blowing system (8) comprising an air blowing nozzle (81), said nozzle being arranged upstream of the roller with respect to the movement direction, **characterized in that** the blowing nozzle (81) is capable of forming an air knife, parallel to the axis of the roller, having a length at least equal to half the length of the roller, towards the nip zone between the compacting roller and the layup surface.

2. Application head according to claim 1, **characterized in that** the blowing nozzle comprises a longitudinal discharge slot arranged parallel to the axis of the roller, or a plurality of outlets arranged in a line parallel to the axis of the roller.

3. Application head according to claim 1 or 2, **characterized in that** the blowing system is capable of delivering an air knife at a flow rate of at least 300 Nl/min, preferably at least 500 Nl/min, more preferably at least 600 Nl/min.

4. Application head according to claim 1 to 3, **characterized in that** the blowing system is capable of delivering an air knife at a flow rate of at least 50 Nl/min per centimetre of air knife lengthwise, preferably at least 100 Nl/min, more preferably at least 120 Nl/min.

5. Application head according to one of claims 1 to 4, **characterized in that** the air blowing nozzle (81) is connected to a supply source formed by a source of compressed air or to a turbine delivering pulsed air.

6. Application head according to one of claims 1 to 5, **characterized in that** the said compacting roller comprises a rigid central tube (4) and at least one cylindrical part (3, 103, 203, 403, 503) made of a flexible material, elastically deformable, assembled on said central tube, and an anti-adherent sheath (6, 106, 206, 406, 506) covering the cylindrical part, said anti-adherent sheath has lateral portions (61, 161, 261, 461, 561) extending beyond the cylindrical surface (33) of the cylindrical part in the direction of the rotation axis (A) of the roller, the assembly of said anti-adherent sheath with said cylindrical part being carried out by said lateral portions.

7. Head according to claim 6, **characterized in that** said anti-adherent sheath (6, 106, 206, 406, 506) is thermoformed on the cylindrical part, the thermoformed lateral portions ensuring at least partially the blocking of the sheath in rotation and in translation.

8. Head according to claim 6 or 7, **characterized in that**
- said central tube (4) is provided with radial holes (41), said cylindrical part of flexible material having fluid communication means (32) capable of putting said radial holes in fluid communication with the external cylindrical surface (33) of the cylindrical part, said head comprising thermal regulation means capable of injecting a thermal regulated gas flow into the internal passage of the central tube,
- said roller comprises a draining intermediate layer (5, 105, 205, 405, 505) interposed between the anti-adherent sheath and the cylindrical part, said intermediate layer ensuring the evacuation of the thermal regulation fluid through the lateral faces of the roller.

9. Head according to one of claims 1 to 8, **characterized in that** it comprises a laser type heating system capable of emitting a laser beam towards the contact zone between the roller and a layup surface.

10. Head according to one of claims 1 to 9, **characterized in that** it further comprises a secondary blowing system (7) comprising a secondary air blowing nozzle (71), said secondary nozzle being arranged downstream of the roller relative to the movement direction, and is capable of forming an air knife, parallel to the axis of the roller, towards the compacting roller.

11. Method for manufacturing a composite material part comprising the application of continuous fibres onto an application surface, **characterized in that** this application of fibres is carried out by means of a fibre application head according to one of claims 1 to 10, by relative movement of the application head in relation to the layup surface along layup trajectories, said nozzle forming an air knife during laying up, parallel to the axis of the roller, having a length at least equal to half the length of the roller, towards the nip zone between the compacting roller and the layup surface, so as to blow out the combustion flames.

12. Method according to claim 11, **characterized in that** the application of fibres is carried out with an air knife at a flow rate of at least 300 Nl/min, preferably at least 500 Nl/min, more preferably at least 600 Nl/min.

13. Method according to claim 12 or 13, **characterized in that** the application of fibres is carried out with an air knife at a flow rate of at least 50 Nl/min per centimetre of air knife lengthwise, preferably of at least 100 Nl/min, more preferably at least 120 Nl/min.
